# EUROPÄISCHE PATENTSCHRIFT

(11) **EP 0 846 605 B1**
(45) Veröffentlichungstag und Bekanntmachung des Hinweises auf die Patenterteilung: **13.03.2002**
(21) Anmeldenummer: 97119232.3
(22) Anmeldetag: 04.11.1997
(51) Int. Cl.: B60T 15/42, B60T 15/52

(54) **Pneumatische Bremseinrichtung**
Pneumatic brake installation
Installation pneumatique de freinage

(30) Priorität: 05.12.1996 DE 19650536
(43) Veröffentlichungstag der Anmeldung: 10.06.1998
(73) Patentinhaber: Motzener Strasse 25 Grundstücks GmbH & Co. Besitz KG, D-12277 Berlin (DE)
(72) Erfinder: Inozemtsev, Vladimir, Prof., 129224 Moskau (RU)
(74) Vertreter: Beetz & Partner Patentanwälte

(56) Entgegenhaltungen:
- EP-A- 0 645 292
- WO-A-81/01393
- CH-A- 623 001
- DE-A- 3 127 775
- DE-A- 19 530 667

## Beschreibung

Die Erfindung betrifft eine pneumatische Bremseinrichung, insbesondere für Schienenfahrzeuge, die mindestens einen Bremszylinder, ein Hauptsteuerventil mit einer Steuerkammer und einem Vorratsbehälter zur Steuerung der Füllung und Entleerung des Bremszylinders in Abhängigkeit vom Druck in einer Hauptluftleitung sowie ein Nebensteuerventil zur Steuerung einer beschleunigten Entleerung der Hauptluftleitung beim Bremsen enthält.

Es sind bereits Bremseinrichtungen bekannt, z.B aus EP-A-0 645 292, bei denen ein Dreidruckventil die Füllung und Entlüftung eines Bremszylinders in Abhängigkeit von den in einer Hauptluftleitung herbeigeführten Druckveränderungen steuert. Ein Beispiel hierfür ist die KE-Bremse, die von der UIC für den internationalen Zugverkehr zugelassen ist. Bei dieser Bremse ist ein zusätzliches Ventil zur Beschleunigung der Bremsvorgänge bei der Einleitung des Bremsvorgangs vorgesehen, über das bei der ersten Druckabsenkung in der Hauptluftleitung zusätzlich Luft aus der Hauptluftleitung abgeführt wird. Dadurch wird bei der ersten Bremsstufe eine schnellere Absenkung des Hauptleitungsdrucks auch am letzten Wagen eines langen Zuges und damit eine gleichmäßigere Bremswirkung über der gesamten Zuglänge erreicht. Diese zusätzliche Entlüftung der Hauptluftleitung erfolgt allerdings nur bei der ersten Druckabsenkung der Hauptluftleitung zu Bremsbeginn.

Aufgabe der Erfindung ist es, eine Bremseinrichtung der eingangs genannten Art zu schaffen, die auch bei Verstärkung einer anfänglichen Bremsstufe eine beschleunigte Entlüftung der Hauptluftleitung und somit bei beliebigen Bremsstufen eine schnellere und gleichmäßigere Bremswirkung auch bei großen Zuglängen ermöglicht.

Diese Aufgabe wird erfindungsgemäß dadurch gelöst, daß das Nebensteuerventil eine erste bewegliche Trennwand zwischen einem mit der Steuerkammer des Hauptsteuerventils verbundenen ersten Druckraum und einem mit der Hauptluftleitung verbundenen zweiten Druckraum sowie eine zweite bewegliche Trennwand zwischen einem dritten Druckraum und der Umgebung enthält, wobei die beiden Trennwände über eine Stange zur Betätigung zweier nacheinander angeordneter Ventile verbunden sind, von denen das erste Ventil die Füllung und Entlüftung des dritten Druckraums und das zweite Ventil die Entlüftung der Hauptluftleitung an die Umgebung steuert.

Bei der erfindungsgemäßen Bremseinrichtung erfolgt eine zusätzliche Entlüftung der Hauptluftleitung nicht nur bei der ersten über das Führerbremsventil eingesteuerten Bremsstufe, sondern auch bei beliebigen nachfolgenden Bremsverstärkungen. Im gesamten Bremsbereich werden somit die insbesondere bei langen Zügen relevanten Bremsverzögerungen zwischen den ersten und letzten Wagen verringert. Dadurch wird eine Verkürzung des Bremsweges und eine Reduzierung der Längskräfte innerhalb des Zugverbandes ermöglicht. Durch die Ausbildung des Nebensteuerventils als Dreidruckventil wird eine optimale Regelung der Drucksenkung in der Hauptluftleitung und ihrer Entlüftung beim Bremsen in Übereinstimmung mit der Drucksenkung durch Betätigung des Führerbremsventiles erreicht. Im Gegensatz zu bekannten Beschleunigungseinrichtungen ist außerdem keine gesonderte Anpassung an das jeweilige Hauptleitungsvolumen des entsprechenden Fahrens, z.B. durch genaue Düsenabstimmung, erforderlich.

Vorteilhafte Ausgestaltungen und zweckmäßige Fortbildungen der Erfindung sind in den Unteransprüchen angegeben. So ist das erste Ventil des Nebensteuerventils in einer besonders kompakten Bauform ein Wechselventil mit einem durch die Stange entgegen der Kraft einer Feder verschiebbaren Ventilteller, der mit einem gehäusefesten Ventilsitz ein Einlaßventil zwischen einem Ventilraum und dem dritten Druckraum sowie mit einer Durchgangsbohrung in der Stange ein Auslaßventil zwischen dem dritten Druckraum und der Umgebung bildet. Das zweite Ventil ist ein Absperrventil zwischen einem mit der Hauptluftleitung verbundenen Ventilraum und der Umgebung. Dem ersten und dem zweiten Ventil ist jeweils eine Drossel vorgeschaltet, die in ihrer Größe derart aufeinander abgestimmt sind, daß bei der Entlüftung der Hauptluftleitung durch das Führerbremsventil das Einlaßventil und das zweite Ventil geöffnet und daß beim Schließen des Führerbremsventiles das Einlaßventil und das zweite Ventil geschlossen sind.

Der Ventilraum des ersten Ventils kann an den Vorratsbehälter angeschlossen sein. Zur Reduzierung des Druckluftverbrauchs aus dem Vorratsbehälter kann der Ventilraum des ersten Ventils über die erste Drossel auch an die Hauptluftleitung angeschlossen sein.

Das Hauptsteuerventil ist in einer bevorzugten Ausführung ebenfalls als Dreidruckventil ausgebildet. Es ist allerdings auch möglich, daß das Hauptsteuerventil ein Zweidruckventil ist. Das als Dreidruckventil ausgebildete Nebensteuerventil ist zweckmäßigerweise mit dem Hauptsteuerventil in einem gemeinsamen Gehäuse untergebracht. Es kann allerdings auch als gesondertes Bauteil ausgeführt sein, das an das Hauptsteuerventil angebaut wird.

Weiter Vorteile und Besonderheiten der Erfindung ergeben sich aus der folgenden Beschreibung bevorzugter Ausführungsbeispiele der Erfindung anhand der Zeichnung. Es zeigen:
Fig. 1 eine schematische Darstellung einer ersten Ausführungsform einer erfindungsgemäßen Bremseinrichtung; und
Fig. 2 eine schematische Darstellung einer zweiten Ausführungsform der erfindungsgemäßen Bremseinrichtung.

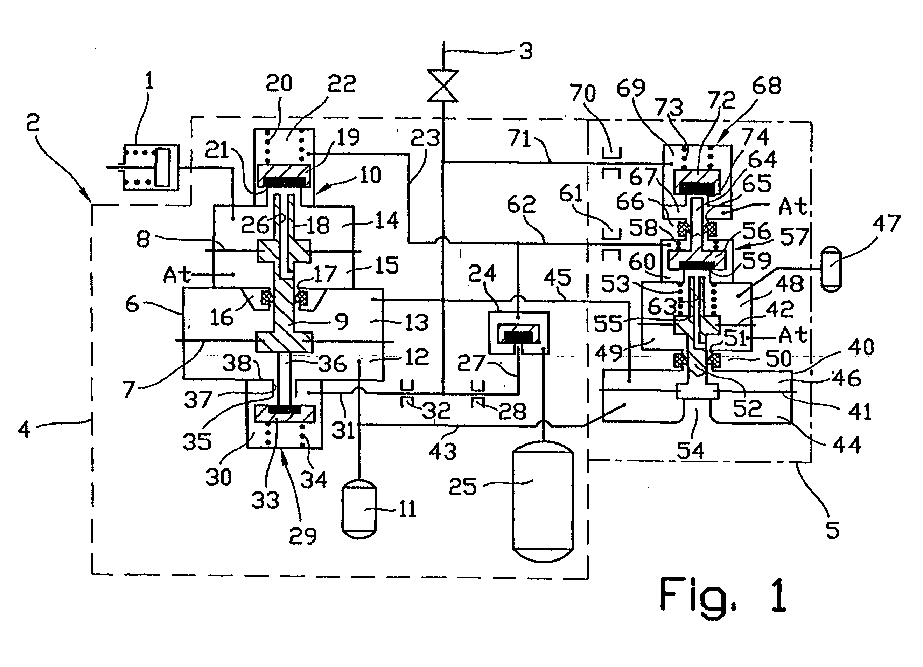

Die in Fig. 1 schematisch dargestellte pneumatische Bremseinrichtung enthält einen Bremszylinder 1 und eine im allgemeinen als Steuerventil bezeichnete Ventilanordnung 2 zur Steuerung des Bremszylinderdrucks in Abhängigkeit von den in einer Hauptluftleitung 3 herbeigeführten Druckänderungen. Das gezeigte Steuerventil 2 umfaßt ein als Dreidruckventil ausgebildeten Hauptsteuerventil 4 zur Steuerung der Füllung und Entleerung des Bremszylinders 1 und ein Nebensteuerventil 5 zur Steuerung einer beschleunigten Entleerung der Hauptluftleitung 3 beim Bremsen.

Das Hauptsteuerventil 4 enthält zwei in einem Gehäuse 6 angeordnete bewegliche Trennwände 7 und 8 unterschiedlicher Größe, die über eine axial verschiebbare Stange 9 zur Betätigung eines Wechselventils 10 miteinander verbunden sind. In der gezeigten Ausführung sind die beweglichen Trennwände als Membrankolben ausgebildete. Die größere Trennwand 7 trennt in dem Gehäuse 6 einen mit einer Steuerkammer 11 verbundenen ersten Druckraum 12 von einem mit der Hauptluftleitung 3 verbundenen zweiten Druckraum 13 ab. Durch die kleinere Trennwand 8 wird ein mit dem Bremszylinder 1 verbundener dritter Druckraum 14 von einem zur Umgebung offenen Raum 15 getrennt. Zwischen dem zweiten Druckraum 13 und dem an diesen angrenzenden Raum 15 ist eine feste Zwischenwand 16 mit einer Bohrung 17 ausgebildet, in der die axial verschiebbare Stange 9 abgedichtet geführt ist. Die an den beiden Trennwänden 7 und 8 befestigte Stange 9 hat einen durch den dritten Druckraum 14 ragenden Ansatz 18, der mit einem Ventilteller 19 des Wechselventils 10 zusammenwirkt. Der Ventilteller 19 wird durch eine Feder 20 gegen einen gehäusefesten Ventilsitz 21 gedrückt und bildet zusammen mit diesem ein Einlaßventil zwischen dem mit dem Bremszylinder 1 in Verbindung stehenden dritten Druckraum 14 und einem ersten Ventilraum 22 des Hauptsteuerventils 4, der über eine Leitung 23 mit einem Vorratsbehälter 25 verbunden ist. Durch den Ansatz 18 verläuft eine Durchgangsbohrung 26, die einerseits an der oberen Stirnseite des Ansatzes 18 und andererseits in den dritten Druckraum 14 mündet. Durch den Ventilteller 19 und den Ansatz 18 mit der Durchgangsbohrung 26 wird ein Auslaßventil zwischen dem in Verbindung mit dem Bremszylinder stehenden dritten Druckraum 14 und dem zur Umgebung geöffneten Raum 15 gebildet. Der Vorratsbehälter 25 ist über ein Rückschlagventil 24 und eine Leitung 27 mit darin angeordneter Drossel 28 mit der Hauptluftleitung 3 verbunden. Durch das Rückschlagventil 24 soll verhindert werden, daß der Druck im Vorratsbehälter 25 über die Hauptluftleitung 3 abgesenkt wird.

Der erste Druckraum 12 steht ferner über ein Absperrventil 29 mit einem zweiten Ventilraum 30 des Hauptsteuerventils 4 in Verbindung, der sich an den ersten Druckraum 12 anschließt. Über eine Leitung 31 mit darin angeordneter Drossel 32 ist der zweite Ventilraum 30 mit der Hauptluftleitung 3 verbunden. Das Absperrventil 29 enthält einen Ventilteller 33, der in Schließrichtung durch eine Feder 34 gegen einen gehäusefesten Ventilsitz 35 gedrückt wird. In Öffnungsrichtung wird der Ventilteller 33 durch einen Stößel 36 betätigt, der durch eine Bohrung 37 in einer festen Zwischenwand 38 zwischen dem ersten Druckraum 12 und dem zweiten Ventilraum 30 verläuft und die Stange 9 mit dem Ventilteller 33 verbindet.

In- der in Fig. 1 gezeigten Stellung wird der Ventilteller 19 durch die Feder 20 gegen den Ventilsitz 21 gedrückt, so daß die Verbindung zwischen dem Vorratsbehälter 25 und dem Bremszylinder 1 über die Leitung 23 unterbrochen ist. Der Ansatz 18 ist von dem Ventilteller 19 beabstandet, wobei über die Durchgangsbohrung 26 eine Verbindung zwischen dem Bremszylinder 1 und der Umgebung besteht. Wenn der Ventilteller 19 über den Ansatz 18 der Stange 9 von seinem Ventilsitz 21 abgehoben wird, ist die Durchgangsbohrung 26 vom Ventilteller 19 geschlossen und die Verbindung zwischen dem Bremszylinder 1 und der Umgebung unterbrochen. Gleichzeitig wird die Verbindung zwischen dem Vorratsbehälter 25 und dem Bremszylinder 1 geöffnet. Der Stößel 36 ist derart ausgelegt, daß das Absperrventil 29 in der in fig. 1 gezeigten Stellung geöffnet ist und beim Abheben des Ventiltellers 19 vom Ventilsitz 21 geschlossen wird.

Das ebenfalls als Dreidruckventil ausgebildete Nebensteuerventil 5 weist zwar in einem Gehäuse 40 angeordnete bewegliche Trennwände 41 und 42 unterschiedlicher Größe auf. Auch hier sind die Trennwände als Membrankolben ausgebildet. Durch die größere Trennwand 41 wird in dem Gehäuse 40 ein mit der Steuerkammer 11 des Hauptsteuerventils 4 über eine Leitung 43 in Verbindung stehender erster Raum 44 von einem mit der Hauptluftleitung 3 über eine Leitung 45 verbundenen zweiten Raum 46 getrennt. Die kleinere Trennwand 42 trennt einen mit einem Behälter 47 verbundenen dritten Raum 48 von einem zur Umgebung offenen Raum 49 ab. Zwischen dem zweiten Raum 46 und dem zur Umgebung offenen Raum 49 ist eine feste Zwischenwand 50 mit einer Durchgangsbohrung 51 ausgebildet, in der eine an beiden Trennwänden 41 und 42 befestigte Stange 52 abgedichtet und axial verschiebbar geführt ist. Durch eine im dritten Raum 48 angeordnete Druckfeder 53 wird die Stange 52 gegen eine Anlage 54 im ersten Raum 44 gedrückt. Die Stange 52 hat einen durch den dritten Raum 48 verlaufenden Ansatz 55, der mit einem Ventilteller 56 eines Wechselventils 57 zusammenwirkt. Der Ventilteller 56 wird von einer Feder 58 gegen einen gehäusefesten Ventilsitz 59 gedrückt und bildet zusammen mit diesem ein Einlaßventil zwischen einem ersten Ventilraum 60 und dem dritten Druckraum 48 des Nebensteuerventils 5. Der Ventilraum 60 ist über eine mit einer Drossel 61 versehene Leitung 62 mit dem Vorratsluftbehälter 25 und über die Leitung 23 mit dem ersten Ventilraum 22 des Hauptsteuerventils 4 verbunden. In dem Ansatz 55 ist eine Durchgangsbohrung 63 vorgesehen, die einerseits an der oberen Stirnseite des Ansatzes 55 und andererseits in den zur Umgebung offenen Raum 49 mündet. Durch den Ventilteller 56 und den Ansatz 55 mit der Durchgangsbohrung 63 wird so ein Auslaßventil zwischen dem dritten Druckraum 48 und der Umgebung gebildet.

An dem Ventilteller 56 ist ein Ventilstößel 64 angeformt, der in einer Bohrung 65 in einer festen Zwischenwand 66 zwischen dem Raum 60 und einem zur Umgebung offenen Raum 67 axial verschiebbar und abgedichtet geführt ist. Durch den Ventilstößel 64 wird ein Absperrventil 68 zwischen dem Raum 67 und einem zweiten Ventilraum 69 des Nebensteuerventils 5 gesteuert. Der zweite Ventilrlum 69 ist durch eine mit einer Drossel 70 versehene Leitung 71 mit der Hauptluftleitung 3 verbunden. Das Absperrventil 68 enthält einen Ventilteller 72, der durch eine Druckfeder 73 in Schließrichtung gegen einen gehäusefesten Ventilsitz 74 gedrückt und in Öffnungsrichtung durch den Ventilstößel 64 vom Ventilsitz 74 abgehoben wird.

In der in Fig. 1 gezeigten Stellung liegt die durch die Feder 53 beaufschlagte Stange 52 mit ihrem in Fig. 1 unteren Ende auf der Anlage 54 auf. In dieser Stellung ist der Ansatz 55 vom Ventilteller 56 beabstandet, wobei über die Durchgangsbohrung 63 eine Verbindung zwischen dem Behälter 47 und der Umgebung besteht. In dieser Stellung ist auch das Absperrventil 68 geschlossen und damit die Verbindung zwischen der Hauptluftleitung 3 und der Umgebung über das Nebensteuerventil 5 unterbrochen.

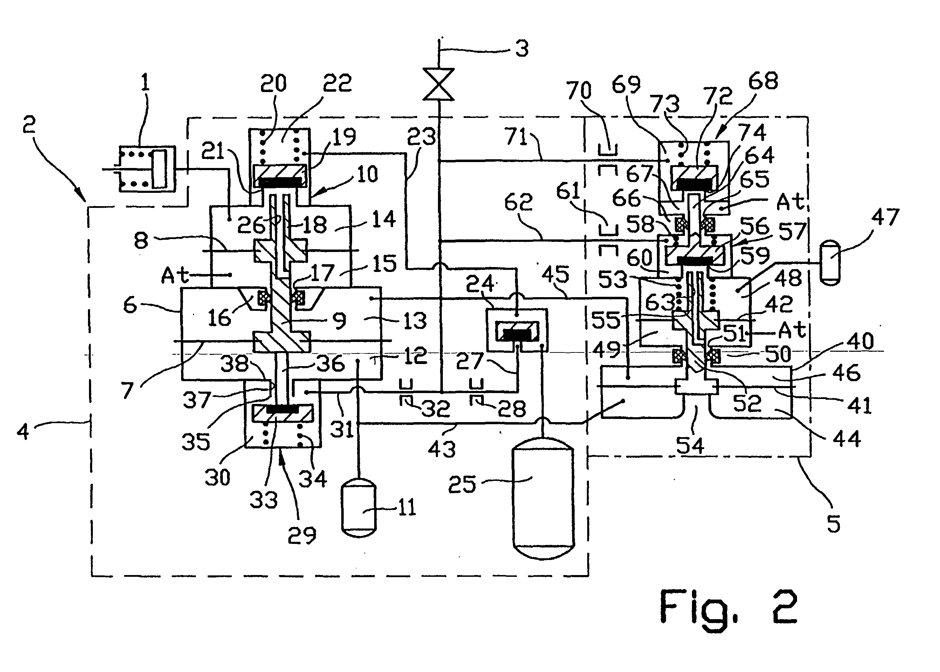

In Fig. 2 ist ein weiteres Ausführungsbeispiel der Erfindung gezeigt. Das zweite Ausführungsbeispiel unterscheidet sich von der ersten Variante nur dadurch, daß die zum Raum 60 führende Leitung 62 mit der Drossel 61 nicht an die Verbindungsleitung 23 zwischen dem Vorratsbehälter 25 und dem Ventilraum 22 des Hauptsteuerventils 4, sondern direkt an die Hauptluftleitung 3 angeschlossen ist.

Die in den Figuren dargestellte pneumatische Bremseinrichtung funktioniert wie folgt:

Im vollständige aufgefüllten, betriebsbereiten Zustand nimmt die Bremseinrichtung die in den Fig. 1 und 2 gezeigte Stellung ein. Die Steuerkammer 11 und der Vorratsbehälter 25 sind auf den in der Hauptluftleitung 3 herrschenden Betriebsdruck aufgefüllt. In den Druckräumen 12 und 13 des Hauptsteuerventils 4 sowie den Räumen 44 und 46 des Nebensteuerventils 5 liegt ebenfalls der Hauptleitungsdruck an. Der Bremszylinder 1 ist über den Druckraum 14 des Hauptsteuerventils 4 und die geöffnete Durchgangsbohrung 26 zur Umgebung entlüftet. Im Nebensteuerventil 5 wird die Stange 52 von der Feder 53 gegen die Anlage 54 gedrückt, so daß die beiden Ventilteller 56 und 72 des Nebensteuerventils 5 auf den zugehörigen gehäusefesten Ventilsitz 59 bzw. 74 aufliegen. Damit ist in dieser Stellung die Verbindung zwischen dem Vorratsbehälter 25 und dem Raum 48 des Nebensteuerventils 5 und die Verbindung zwischen der Hauptluftleitung 3 und der Umgebung unterbrochen.

Wenn zum Bremsen der Druck in der Hauptluftleitung 3 durch Öffnen eines nicht dargestellten Führerbremsventils abgesenkt wird, sinkt auch der Druck im Druckraum 13 des Hauptsteuerventils 4 entsprechend ab, während sich der Druck im Druckraum 12 aufgrund der Drossel 32 nur verzögert abbaut. Die bewegliche Trennwand 7 wird daher in Richtung des Raums 13 verschoben und hebt dabei über die Stange 9 den Ventilteller 19 vom Ventilsitz 21 ab. Dadurch wird die Durchgangsbohrung 26 vom Ventilteller 19 und somit die Verbindung vom Bremszylinder 1 zur Umgebung geschlossen. Gleichzeitig wird die Verbindung zwischen dem Ventilraum 22 und dem dritten Druckraum 14 und somit der Verbindung zwischen dem Vorratsbehälter 25 und dem Bremszylinder 1 geöffnet, so daß die Druckluft aus dem Vorratsbehälter 25 in den Bremszylinder strömen kann. Durch die Verschiebung der beweglichen Trennwand 7 in Richtung des Raums 13 wird außerdem das Absperrventil 29 über den Stößel 36 geschlossen, wodurch der Druckraum 12 vom Ventilraum 30 abgetrennt wird. Ein Überströmen der Druckluft vom Vorratsbehälter 25 in die Hauptluftleitung 3 wird durch das Rückschlagventil 24 verhindert.
Der zum Bremsen eingesteuerte Druckabfall in der Hauptluftleitung 3 bewirkt gleichzeitig im Nebensteuerventil 5, daß sich die bewegliche Trennwand 41 unter dem Einfluß der Druckdifferenz zwischen den Räumen 44 und 46 in Richtung des Raums 46 bewegt, wobei über die Stange 52 zunächst der Ventilteller 56 vom Ventilsitz 59 und dann der Ventilteller 72 vom Ventilsitz 74 abgehoben wird. Dadurch wird die Durchgangsbohrung 63 vom Ventilteller 56 geschlossen und somit der Druckraum 48 von der Umgebung abgesperrt. Die Hauptluftleitung 3 wird über die Leitung 71, die Drossel 70, den Ventilraum 69 und das geöffnete Absperrventil 68 zur Umgebung entlüftet. Gleichzeitig strömt die Druckluft bei der in Fig. 1 dargestellten Ausführung aus dem Vorratsbehälter 25 oder bei der Ausführung gemäß Fig. 2 aus der Hauptluftleitung 3 über die Leitung 62, die Drossel 61 und das geöffnete Einlaßventil in den Druckraum 48 und in den Behälter 47. Dadurch wird über das Nebensteuerventil beim Bremsen zusätzlich Druckluft aus der Hauptluftleitung 3 abgezapft.

Während der Entlüftung der Hauptluftleitung 3 durch das nicht dargestellte Führerbremsventil hält die Stange 52 das Einlaßventil 56, 59 und das Absperrventil 68 des Nebensteuerventils 4 offen, da die Druckerhöhung im dritten Druckraum 48 und im Behälter 47 sowie ihr Einfluß auf die bewegliche Trennwand 42 gegenüber der Erhöhung der auf die bewegliche Zwischenwand 41 wirkenden Druckdifferenz zurückbleibt.

Sobald die Entlüftung der Hauptluftleitung 3 über das Führerbremsventil aufhört, wird die Schnelligkeit der Drucksenkung in der Hauptluftleitung 3 kleiner und die Einströmung der Druckluft in den dritten Druckraum 48 und in den Behälter 47 über die Drossel 61 und das geöffnete Einlaßventil 56, 59 sichert eine auf die bewegliche Trennwand 42 wirkende Druckerhöhung, durch die ein Druckgleichgewicht mit der auf die Trennwand 41 wirkenden Druckdifferenz hergestellt wird. Dabei wird die Verbindung zwischen der Hauptluftleitung 3 und der Umgebung und damit die beschleunigte Entlüftung der Hauptluftleitung 3 bis zur nächsten durch das Führerbremsventil eingesteuerten Drucksenkung der Hauptluftleitung unterbrochen.

Im Hauptsteuerventil 4 ist die Bremsabschlußstellung erreicht, wenn die durch den Druckanstieg im Bremszylinder 1 und im Raum 14 auf die Trennwand 8 wirkende Kraft ausreicht, um die Stange 9 bis zur Auflage des Ventiltellers 19 auf dem Ventilsitz nach unten zu bewegen, so daß ein weiterer Druckanstieg im Bremszylinder 1 verhindert wird. Wenn zur Verstärkung der Bremsung der Druck in der Hauptluftleitung weiter vermindert wird, wiederholt sich der vorstehend beschriebene Vorgang.

Das Lösen der Bremse erfolgt durch Erhöhung des Hauptluftleitungsdrucks, wobei sich die Stange 52 des Nebensteuerventils nach unten bewegt und der Raum 48 sowie der Behälter 47 über die Durchgangsbohrung 63 mit der Umgebung verbunden wird. Die Drucksenkung im Raum 48 und im Raum 47 erfolgt entsprechend der Verringerung der auf die bewegliche Trennwand 41 wirkenden Druckdifferenz zwischen den Druckwerten in den Druckräumen 44 und 46. Auch im Hauptsteuerventil 4 wird die Stange 9 durch den Druckaufbau in der Hauptluftleitung unter Öffnung des Auslaßventils zwischen dem Bremszylinder entsprechend der Druckdifferenz zwischen den Räumen 12 und 13 nach unten gedrückt.

## Patentansprüche

1. Pneumatische Bremseinrichtung, insbesondere für Schienenfahrzeuge, mit
- mindestens einem Bremszylinder (1),
- einem Hauptsteuerventil (4) mit einer Steuerkammer (11) und einem Vorratsbehälter (25) zur Steuerung der Füllung und Entleerung des Bremszylinders (1) in Abhängigkeit vom Druck in einer Hauptluftleitung (3), und
- einem Nebensteuerventil (5) zur Steuerung einer beschleunigten Entleerung der Hauptluftleitung (3) beim Bremsen,
**dadurch gekennzeichnet,**
- **daß** das Nebensteuerventil (5) eine erste bewegliche Trennwand (41) zwischen einem mit der Steuerkammer (11) des Hauptsteuerventils (4) verbundenen ersten Druckraum (44) und einem mit der Hauptluftleitung (3) verbundenen zweiten Druckraum (46) sowie eine zweite bewegliche Trennwand (42) zwischen einem dritten Druckraum (48) und der Umgebung enthält und
- **daß** die beiden Trennwände (41, 42) über eine Stange (52) zur Betätigung zweier nacheinander angeordneter Ventile (57, 68) verbunden sind, von denen das erste Ventil (57) die Füllung und Entlüftung des dritten Druckraums (48) und das zweite Ventil (68) die Entlüftung der Hauptluftleitung (3) an die Umgebung steuert.

2. Pneumatische Bremseinrichtung nach Anspruch 1, **dadurch gekennzeichnet, daß** das erste Ventil (57) ein Wechselventil mit einem durch die Stange (52) entgegen der Kraft einer Feder (53) verschiebbaren Ventilteller (56) ist, der mit einem gehäusefesten Ventilsitz (59) ein Einlaßventil zwischen einem Ventilraum (60) und dem dritten Druckraum (48) sowie mit einer Duchgangsbohrung (63) in der Stange (52) ein Auslaßventil zwischen dem dritten Druckraum (48) und der Umgebung bildet, und daß das zweite Ventil (68) ein Absperrventil zwischen einem mit der Hauptluftleitung (3) verbundenen Ventilraum (69) und einem zur Umgebung offenen Raum (67) ist.

3. Pneumatische Bremseinrichtung nach Anspruch 2, **dadurch gekennzeichnet, daß** dem ersten Ventil (57) eine erste Drossel (61) und dem zweiten Ventil (68) eine zweite Drossel (70) vorgeschaltet sind, die in ihrer Größe derart aufeinander abgestimmt sind, daß bei der Entlüftung der Hauptluftleitung (3) durch ein Führerbremsventil das Einlaßventil (56, 59) und das zweite Ventil (68) geöffnet und daß bei Beendigung der Entlüftung der Hauptluftleitung (3) durch das Führerbremsventil das Einlaßventil (56, 59) und das zweite Ventil (68) geschlossen sind.

4. Pneumatische Bremseinrichtung nach Anspruch 3, **dadurch gekennzeichnet, daß** der Ventilraum (60) über die erste Drossel (61) mit dem Vorratsbehälter (25) und der Ventilraum (69) über die zweite Drossel (70) mit der Hauptluftleitung (3) verbunden sind.

5. Pneumatische Bremseinrichtung nach Anspruch 3, **dadurch gekennzeichnet, daß** der Ventilraum (60) über die erste Drossel (61) und der Ventilraum (69) über die zweite Drossel (70) mit der Hauptluftleitung (3) verbunden sind.

6. Pneumatische Bremseinrichtung nach einem der Ansprüche 2 bis 5, **dadurch gekennzeichnet, daß** das zweite Ventil (68) einen gehäusefesten Ventilsitz (74) und einen in Schließrichtung durch eine Feder beaufschlagten Ventilteller (72) aufweist, der über einen an dem Ventilteller (56) des Wechselventils (57) angeformten Stößel (64) betätigbar ist.

7. Pneumatische Bremseinrichtung nach Anspruch 6, **dadurch gekennzeichnet, daß** die Länge des Stößels (64) derart gewählt ist, daß das Einlaßventil (56, 59) vor dem Absperrventil (68) öffnet und der Ventilschluß in umgekehrter Reihenfolge erfolgt.

8. Pneumatische Bremseinrichtung nach einem der Ansprüche 1 bis 7, **dadurch gekennzeichnet, daß** der dritte Druckraum (48) mit einem Behälter (47) verbunden ist.

9. Pneumatische Bremseinrichtung nach einem der Ansprüche 1 bis 8, **dadurch gekennzeichnet, daß** das Hauptsteuerventil (4) eine erste bewegliche Trennwand (7) zwischen einem mit Steuerkammer (11) verbundenen Raum (12) und einem mit der Hauptluftleitung (3) verbundenen Raum 13 sowie eine zweite bewegliche Trennwand (8) zwischen einem mit dem Bremszylinder (1) verbundenen Raum (14) und der Umgebung enthält, wobei die beiden Trennwände (7, 8) über eine Stange (9) zur Betätigung eines Ventils (10) für die Steuerung der Druckluftverbindung zwischen dem Bremszylinder (1) und dem Vorratsbehälter (25) oder der Umgebung verbunden sind.

## Claims

1. A pneumatic brake installation, particularly for rail vehicles, with
- at least one brake cylinder (1)
- a main control valve (4) with a control chamber (11) and a reservoir (25) for controlling the filling and emptying of the brake cylinder (1) according to the pressure in a principal air duct (3) and
- a secondary control valve (5) for controlling an accelerated exhaustion of air from the principal air duct (3) when braking
**characterised by** the fact
- that the secondary control valve (5) contains a first movable partition (41) between a first pressure space (44) connected to the control chamber (11) of the main control valve (4) and a second pressure space (46) connected to the principal air duct (3) as well as a second movable partition (42) between a third pressure space (48) and the environment and
- that both partitions (41, 42) are connected through a rod (52) for the actuation of two valves (57, 68) arranged sequentially, from which the first valve (57) controls the filling and evacuation of air from the third pressure space (48) and the second valve (68) controls the evacuation of air from the principal air duct (3) to the environment.

2. A pneumatic brake installation according to Claim 1, **characterised by** the fact that the first valve (57) is a shuttle valve with a valve disc (56) which is movable against the tension of a spring (53) by means of the rod (52) which, together with a valve seat (59) in an airtight housing, forms an inlet valve between a valve space (60) and the third pressure space (48), as well as a through bore (63) in the rod (52), an outlet valve between the third pressure space (48) and the environment and that the second valve (68) is a stop valve between a valve space (69) connected with the principal air duct (3) and a space (67) which is open to the environment.

3. A pneumatic brake installation according to Claim 2, **characterised by** the fact that a first throttle (61) is connected in series with the first valve (57) and a second throttle (70) in series with the second valve (68), the sizes of the throttles being coordinated in such a way that during the exhaustion of air from the principal air duct (3), the inlet valves (56, 59) and the second valve (68) are opened by means of a brake regulating valve and that at the end of the exhaustion of air from the principal air duct (3), the inlet valves (56, 59) and the second valve (68) are closed by means of the said brake regulating valve.

4. A pneumatic brake installation according to Claim 3, **characterised by** the fact that the valve space (60) is connected with the reservoir (25) by means of the first throttle (61) and the valve space (69) is connected with the principal air duct (3) by means of the second throttle (70).

5. A pneumatic brake installation according to Claim 3, **characterised by** the fact that the valve space (60) is connected with the principal air duct (3) by means of the first throttle (61) and the valve space (69) is connected to the said principal air duct (3) by means of the second throttle (70).

6. A pneumatic brake installation according to one of the Claims from 2 to 5, **characterised by** the fact that the second valve (68) has a valve seat (74) in an airtight housing and a valve disc (72) which is sprung in the direction of closing and which can be actuated by means of a tappet (64), formed onto the valve disc (56) of the shuttle valve (57)

7. A pneumatic brake installation according to Claim 6, **characterised by** the fact that the length of the tappet (64) is so chosen that the inlet valves (56, 59) open before the stop valve (68) and the closure of the valve takes place in reverse order.

8. A pneumatic brake installation according to one of the Claims from 1 to 7, **characterised by** the fact that the third pressure space (48) is connected to a container (47).

9. A pneumatic brake installation according to one of the Claims from 1 to 8, **characterised by** the fact that the main control valve (4) contains a first movable partition (7) between a space (12) connected with the control chamber (11) and a space (13) connected with the principal air duct (3), as well as a second movable partition (8) between a space (14) connected with the brake cylinder (1) and the environment, where both the partitions (7, 8) are connected by means of a rod (9) which actuates a valve (10) for the control of the compressed air connection between the brake cylinder (1) and the reservoir (25), or the environment.

## Revendications

1. Système de freinage pneumatique, notamment pour les véhicules sur rails, doté
- au moins d'un cylindre de frein (1),
- d'une soupape de commande principale (4) munie d'une chambre de commande (11) et d'un réservoir (25), destinée à commander le remplissage et le vidage du cylindre de frein (1) en fonction de la pression dans une conduite d'air principale (3),
- d'une soupape de commande auxiliaire (5) destinée à commander un vidage accéléré de la conduite d'air principale (3) lors du freinage,
**caractérisé en ce que**
- la soupape de commande auxiliaire (5) comporte une première paroi mobile (41) entre une première chambre de compression (44) reliée à une chambre de commande (11) de la soupape de commande principale (4) et entre une deuxième chambre de compression (46) reliée à la conduite principale (3) ainsi qu'une deuxième paroi mobile (42) entre une troisième chambre de compression (48) et l'extérieur, et
- les deux parois (41, 42) sont reliées par le biais d'une tige (52) destinée à actionner les soupapes disposées l'une derrière l'autre (57, 58), dont la première soupape (57) commande le remplissage et la purge de la troisième chambre de compression (48) et la deuxième soupape (68) commande la purge de la conduite d'air principale (3) vers l'extérieur.

2. Système de freinage pneumatique selon la revendication 1, **caractérisé en ce que** la première soupape (57) est une soupape à deux voies dotée d'une tête de soupape (56) déplaçable par le biais d'une tige (52) dans le sens inverse de la force d'un ressort (53), formant une soupape d'entrée avec un siège de soupape (59) fixé dans un logement entre une chambre à soupape (60) et la troisième chambre à pression (48) ainsi qu'une soupape de sortie avec un orifice de passage (63) dans la tige (52) entre la troisième chambre de compression (48) et l'extérieur et **en ce que** la deuxième soupape (68) est une soupape d'arrêt entre une chambre à soupape (69) reliée à la conduite d'air principale (3) et une chambre donnant sur l'extérieur (67).

3. Système de freinage pneumatique selon la revendication 2, **caractérisé en ce que** la première soupape (57) est munie d'un premier étranglement (61) et que la deuxième soupape (68) est munie d'un second étranglement (70) dont la taille concorde de manière à ce que la soupape d'entrée (56, 59) et la deuxième soupape (68) soient ouvertes par un robinet de commande lors de la purge de la conduite d'air principale (3) et que la soupape d'entrée (56, 59) et la deuxième soupape (68) soient fermées par un robinet de commande à la fin de la purge de la conduite d'air principale (3).

4. Système de freinage selon la revendication 3, **caractérisé en ce que** la chambre à soupape (60) est reliée au réservoir (25) par le biais du premier étranglement (61) et la chambre à soupape (69) à la conduite d'air principale (3) par le biais du deuxième étranglement (70).

5. Système de freinage selon la revendication 3, **caractérisé en ce que** la chambre à soupape (60) est reliée par le biais du premier étranglement (61) et la chambre à soupape (69) est reliée par le biais du deuxième étranglement (70) à la conduite d'air principale (3).

6. Système de freinage selon l'une des revendications 2 à 5, **caractérisé en ce que** la deuxième soupape (68) présente un siège de soupape (74) fixé dans un logement et une tête de soupape (72) alimentée par un ressort dans le sens de la fermeture, susceptible d'être actionnée par un taquet (64) formé sur la tête de soupape (56) de la soupape à deux voies (57).

7. Système de freinage selon la revendication 6, **caractérisé en ce que** la longueur du taquet (64) est choisie de manière à ce que la soupape d'entrée (56, 59) s'ouvre avant la soupape d'arrêt (68) et que la fermeture des soupapes s'effectue dans l'ordre inverse.

8. Système de freinage selon l'une des revendications 1 à 7, **caractérisé en ce que** la troisième chambre de compression (48) est reliée à un récipient (47).

9. Système de freinage selon l'une des revendications 1 à 8, **caractérisé en ce que** la soupape de commande principale (4) comporte une première paroi mobile (7) entre une chambre (12) reliée à une chambre de commande (11) et entre une chambre (13) reliée à la conduite d'air principale (3) ainsi qu'une deuxième paroi mobile (8) entre une chambre (14) reliée au cylindre de frein (1) et l'extérieur, les deux parois (7, 8) étant reliées par le biais d'une tige (9) destinée à actionner la soupape (10) pour la commande de la liaison d'air comprimé entre le cylindre de frein (1) et le réservoir (25) ou l'extérieur.
